(19) Europäisches Patentamt
European Patent Office
Office européen des brevets

(11) Veröffentlichungsnummer : **0 443 986 A1**

(12) **EUROPÄISCHE PATENTANMELDUNG**

(21) Anmeldenummer : **91810103.1**

(51) Int. Cl.$^5$ : **G02B 1/04,** C08L 45/00

(22) Anmeldetag : **14.02.91**

(30) Priorität : **23.02.90 CH 576/90
27.06.90 CH 2135/90**

(43) Veröffentlichungstag der Anmeldung :
**28.08.91 Patentblatt 91/35**

(84) Benannte Vertragsstaaten :
**AT BE CH DE DK ES FR GB GR IT LI LU NL SE**

(71) Anmelder : **CIBA-GEIGY AG
Klybeckstrasse 141
CH-4002 Basel (CH)**

(72) Erfinder : **Hagmann, Peter, Dr.
Chamissostrasse 20
W-8759 Hösbach-Bahnhof (DE)**

Erfinder : **Herbrechtsmeier, Peter, Dr.
Friedrich-Stoltze-Strasse 10
W-6240 Königstein (DE)**
Erfinder : **Höfer, Peter
Karlsbader Strasse 50
W-8750 Aschaffenburg (DE)**
Erfinder : **Hörner, Wilhelm
Königsberger Strasse 25
W-8751 Sulzbach/M. (DE)**
Erfinder : **Müller v.d. Haegen, Harro, Dr.
Bergstrasse 23
W-8752 Laufach (DE)**
Erfinder : **Reichner, Martin
Weissenburger Strasse 46
W-8750 Aschaffenburg (DE)**
Erfinder : **Schäfer, Horst, Dr.
Wiesenau 2
W-8750 Aschaffenburg 19 (DE)**
Erfinder : **Seiferling, Bernhard, Dr. Dr.
Wohlfahrtstrasse 6
W-8752 Goldbach (DE)**

(54) **Ophthalmische Linsen auf der Basis von amorphen Fluorpolymeren.**

(57) Die Erfindung betrifft ophthalmische Linsen, wie Kontaktlinsen oder Intraokularlinsen, die im wesentlichen aus einem amorphen Copolymer bestehen, welches Einheiten der Formel I

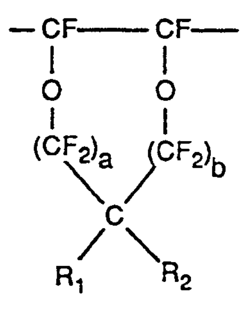

(I)

und Einheiten der Formel II

$$-CF_2-CF_2- \qquad (II)$$

enthält, worin a und b unabhängig voneinander für null, eins oder zwei stehen, und worin $R_1$ und $R_2$ unabhängig voneinander perfluoriertes Niederalkyl bedeuten.

Sie weisen eine Kombination von hoher Härte und Sauerstoffdurchlässigkeit auf. Sie haben darüberhinaus einen derart hohen Glaspunkt, dass sie autoklavierbar sind. Zudem sind ihre Kristallinität und ihr Brechungsindex ausgesprochen niedrig.

EP 0 443 986 A1

# OPHTHALMISCHE LINSEN AUF DER BASIS VON AMORPHEN FLUORPOLYMEREN

Die Erfindung bezieht sich auf ophthalmische Linsen, wie Kontaktlinsen und Intraokularlinsen, die im wesentlichen aus amorphen Fluorpolymeren bestehen, auf Verfahren zur Herstellung solcher Linsen, auf solche Verfahren unter Einbeziehung nachträglicher Oberflächenbehandlungen und auf die Verwendung entsprechender amorpher Fluorpolymere zur Herstellung von Kontaktlinsen und Intraokularlinsen.

Amorphe Fluorpolymere sind Weiterentwicklungen des bereits seit einigen Jahrzehnten bekannten Polytetrafluorethylens. Amorphe Fluorpolymere sind z.B. in der EP-A-073,087 oder der EP-A-111,343 offenbart. Dabei handelt es sich gemäss der EP-A-073,087 um Copolymere, die aus Tetrafluorethylen und Perfluor-2,2-dimethyl-1,3-dioxol sowie eventuell einem dritten Monomer, z.B. Propylen, Isobutylen oder Ethylen erhalten werden. In der EP-A-111,343 werden Polytetrafluorethylenzusammensetzungen offenbart, zu deren Herstellung z.B. gewisse Anteile des vorstehend erwähnten Dioxols oder Derivate davon verwendet werden.

Seit 1989 sind derartige amorphe Fluorpolymere auch im Handel erhältlich. So vertreibt die Firma Dupont die Produkte Teflon AF 1600 und 2400, worin "AF" für "amorphes Fluorpolymer" steht. Bei diesen Produkten handelt es sich um Copolymere von Tetrafluorethylen und Perfluor-2,2-dimethyl-1,3-dioxol.

Gemäss der EP-A-073,087 sind die dort offenbarten amorphen Copolymere für Anwendungen wie Fenster für chemische Reaktionen geeignet, speziell bei Verfahren, in denen Fluorwasserstoff verwendet wird oder entsteht. Die in der EP-A-111,343 offenbarten amorphen Copolymere werden als nützlich bei der Herstellung von gegossenen Teilen bezeichnet, speziell dort, wo glatte Oberflächen wichtig sind, wie bei Dichtsitzen für Kugelventile. Die von der Firma Dupont vertriebenen Polymere Teflon AF 1600 und 2400 werden in der mitgelieferten Produktbeschreibung als geeignet bezeichnet für Beschichtungen oder Abdeckungen für optische Geräte, unter Einschluss solcher, die innerhalb weiter Temperaturbereiche und in chemisch aggressiver Umgebung verwendet werden. An anderer Stelle im Werbematerial ist die Rede davon, dass Teflon AF ein idealer Kandidat für optische Geräte in Medizin, Militär, Luftfahrt und Industrie sei.

Es wurde nun gefunden, dass sich aus amorphen Fluorpolymeren überraschenderweise ophthalmische Linsen mit ausserordentlich vorteilhaften Eigenschaften herstellen lassen. So weisen erfindungsgemässe Kontaktlinsen oder Intraokularlinsen eine Kombination von hoher Härte und Sauerstoffdurchlässigkeit auf. Sie haben darüberhinaus einen derart hohen Glaspunkt, dass sie autoklavierbar sind. Zudem sind ihre Kristallinität und ihr Brechungsindex ausgesprochen niedrig. Der Brechungsindex kann beispielsweise dem Brechungsdindex des Tränenfilms angenähert werden, so dass ein optimaler Strahlengang resultiert. Die Einstellung des Brechungsindex kann z.B. durch Variation der Art und Menge der verwendeten Comonomere erfolgen. Erfindungsgemäss können so z.B. auch torische Kontaktlinsen mit niedrigem Brechungsindex hergestellt werden. Bei der Verwendung erfindungsgemässer Intraokularlinsen werden im Hinblick auf die Materialeigenschaften weniger Komplikationen im Zusammenhang mit Nach-Star-Bildung erwartet.

Bei Verwendung von Materialien mit einem Brechungsindex zwischen 1,47 und 1,52 und der Verwendung einer innentorischen Kontaktlinsen-Geometrie kommt es aufgrund der Brechungsindex-Unterschiede zwischen Tränenflüssigkeit und Linsenmaterial zu einem künstlichen Restastigmatismus, der dann auf der Vorderfläche der Linse mit Hilfe einer torischen Fläche korrigiert werden muss. Die Herstellung und die Anpassung solcher Linsen ist sehr aufwendig.

Verwendet man hingegen bei der Versorgung höherer astigmatischer Hornhäute ein erfindungsgemässes Linsenmaterial mit einem Brechungsindex zwischen 1,31 und 1,33 so ist entweder kein oder nur ein sehr geringer Brechungsindexsprung vorhanden. Somit erübrigt sich die Korrektur des unerwünschten künstlichen Restastigmatismus. Dies verbilligt die Linse und ihre Anpassung wesentlich.

Bei Verwendung von Materialien mit relativ niedrigem Brechungsindex kommt es üblicherweise zu einer nicht optimalen Gesamtdickenverteilung. Im extremen Falle führt der relativ steile Lentikularanstieg zur Unverträglichkeit. Dieser Effekt kann jedoch durch Verwendung eines corneoscleralen Design vermieden werden. Ein corneosclerales Design mit Durchmessern zwischen 11,5 und 13,5 mm führt nicht nur zu einer generellen Verträglichkeitsverbesserung aufgrund des grossen Durchmessers, sondern erlaubt eine ausgewogene Aufteilung der Linse zwischen corneoscleraler Haptik und optisch wirksamer Fläche. Dabei kann die corneosclerale Haptik ohne Rücksicht auf die optischen Anforderungen im Hinblick auf die Verträglichkeit perfekt gestaltet werden. Die bei dem niedrigen Brechungsindex auftretende ungünstige Gesamtdickenverteilung kommt nur im optisch wirksamen Teil zum Tragen und wirkt sich in keiner Weise auf die Verträglichkeit aus.

Ein weiterer grosser Vorteil des erfindungsgemässen Materials liegt in der hohen Sauerstoffdurchlässigkeit, wodurch es für das corneosclerale Design besonders prädestiniert ist. Unter Einbeziehung von Massnahmen zur ausreichenden Unterspülung der Kontaktlinse (Turboeffekt, Mikrotränagen etc.) ist der Einsatz des Materials in Verbindung mit dem corneoscleralen Design unter besonders widrigen Umständen möglich und bietet sich darüberhinaus für das Tragen über mehrere Tage hinweg an.

Die erfindungsgemässen ophthalmischen Linsen vereinen damit eine Palette von günstigen Parametern in sich, wie sie bisher für Kontaktlinsen oder Intraokularlinsen noch nicht beschrieben wurde.

Ein Gegenstand der Erfindung sind daher ophthalmische Linsen bestehend im wesentlichen aus einem amorphen Copolymer, welches Einheiten der Formel I

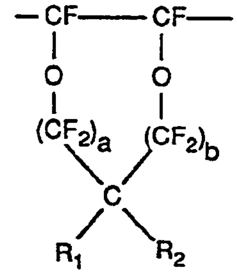

(I)

und Einheiten der Formel II

$$-CF_2-CF_2- \qquad (II)$$

enthält, worin a und b unabhängig voneinander für null, eins oder zwei stehen, und worin $R_1$ und $R_2$ unabhängig voneinander perfluoriertes Niederalkyl bedeuten.

Perfluoriertes Niederalkyl weist bis zu 7 Kohlenstoffatome auf, insbesondere bis zu 4 Kohlenstoffatome, und steht z.B. für perfluoriertes Methyl, Ethyl, Propyl, iso-Propyl, Butyl, iso-Butyl oder tert.-Butyl, bevorzugt für Trifluormethyl.

Die Einheiten der Formel I und der Formel II können als Blöcke vorliegen oder statistisch alternieren. Vorzugsweise beträgt der Anteil der Einheiten der Formel I wenigstens 10 Molprozent, besonders bevorzugt beträgt er 10 bis 80 Mol%.

Die Summe der Indizes a und b in einer Einheit der Formel I ist vorzugsweise nicht grösser als zwei. Besonders bevorzugt bedeuten die Indizes a und b null. In einer speziellen Ausführungsform bedeuten a und b jeweils null und $R_1$ und $R_2$ stehen jeweils für perfluoriertes $C_1$-$C_4$-Alkyl, insbesondere für Trifluormethyl. Gemäss dieser Ausführungsform kann auf weitere Comonomere verzichtet werden, und das Molverhältnis von Einheiten der Formel I zu Einheiten der Formel II liegt im Bereich von 30 :70 bis 90 :10, vorzugsweise in einem Bereich von 50 :50 bis 85 :15. Speziell bevorzugte Verhältnisse von Einheiten der Formel I zu solchen der Formel II sind etwa 50 :50 und etwa 80 :20 (unter "etwa" wird in diesem Zusammenhang eine Abweichung von nicht mehr als ±10 % verstanden).

Zusätzlich zu den Einheiten der Formel I und II können weitere Einheiten in Anteilen von bis zu 40 Mol% vom Copolymer enthalten sein. Auch diese Einheiten können als Blöcke vorliegen oder untereinander oder mit Einheiten der Formel I und II statistisch alternieren. Hierfür geeignet sind Einheiten der Formel III,

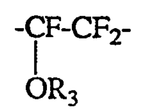

(III)

worin $R_3$ einen perfluorierten Alkylrest der Formel $C_nF_{2n+1}$ bedeutet, worin n für 1 bis 4 steht, oder worin $R_3$ einen perfluorierten Cycloalkylrest der Formel $C_mF_{2m-1}$ bedeutet, worin m für 5 bis 8 steht, und/oder solche der Formel IV,

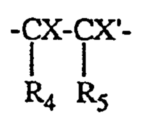

(IV)

worin X und X' unabhängig voneinander für Wasserstoff oder Fluor stehen und $R_4$ und $R_5$ unabhängig voneinander für Wasserstoff, Fluor, Niederalkyl oder perfluoriertes Niederalkyl stehen, ausgenommen solche Einheiten der Formel IV, worin X, X', $R_4$ und $R_5$ für Fluor stehen.

Ein perfluorierter Alkylrest der Formel $C_nF_{2n+1}$ ist beispielsweise Perfluormethyl, -ethyl oder -propyl. Ein perfluorierter Cycloalkylrest der Formel $C_mF_{2m-1}$ ist beispielsweise Perfluorcyclohexyl oder -cyclopentyl. Perfluoriertes Niederalkyl $R_4$ oder $R_5$ hat die vorstehend für $R_1$/$R_2$ angegebene Bedeutung. Niederalkyl $R_4$ oder $R_5$ weist bis zu 7, vorzugsweise bis zu 4 Kohlenstoffatome auf und ist insbesondere Methyl, Ethyl, Propyl oder

Butyl.

Die Einheiten der Formel IV umfassen perfluorierte, teilweise fluorierte und fluorfreie Einheiten. Perfluorierte und fluorfreie Einheiten der Formel IV sind bevorzugt. Erstere sind z.B. solche, worin X, X'und $R_5$ Fluor bedeuten und $R_4$ für perfluoriertes Niederalkyl steht. Letztere sind z.B. solche, worin X, X'und $R_5$ Wasserstoff bedeuten und $R_4$ für Niederalkyl steht. Teilweise fluorierte Einheiten der Formel IV sind z.B. solche, worin X, X'und $R_5$ für Wasserstoff stehen und $R_4$ perfluoriertes Niederalkyl bedeutet.

Beispielsweise können im Copolymer, aus dem die erfindungsgemässen ophthalmischen Linsen bestehen, Einheiten der Formel I und II zusammen mit Einheiten der Formel III auftreten oder zusammen mit Einheiten der Formel IV. Es sind auch Kombinationen von Einheiten der Formel I und II mit Einheiten der Formeln III und IV möglich.

Der Anteil der Einheiten der Formel III und IV, soweit sie vorhanden sind, beträgt insgesamt vorzugsweise bis zu 30 Mol% des Copolymeren und besonders bevorzugt bis zu 20 Mol% des Copolymeren. Eine ebenfalls bevorzugte Ausführungsform der Erfindung besteht aber in ophthalmischen Linsen aus Copolymeren, die zu mindestens 90 Mol%, geeigneterweise zu mindestens 95 Mol% und besonders bevorzugt ausschliesslich aus Einheiten der Formel I und II bestehen. Am stärksten bevorzugt sind ophthalmische Linsen, speziell Kontaktlinsen, aus den im Handel erhältlichen Materialien Teflon AF 1600 und Teflon AF 2400 oder Mischungen davon. Bei diesen Materialien handelt es sich nach Kenntnis der Erfinder um Copolymere, wie sie gemäss Anspruch 4 verwendet werden, mit 50 Mol% respektive 80-90 Mol% Einheiten der Formel I.

Die Monomere, die zur Herstellung der Copolymere erforderlich sind, sind bekannt oder auf an sich bekannte Weise herstellbar. Beispielsweise sind Monomere, die im Copolymer Einheiten der Formel I liefern, im US Patent 3,978,030 beschrieben. Die Monomere, die im Copolymer Einheiten der Formel II oder IV liefern, sind durchweg käuflich. Die Monomere, die im Copolymer Einheiten der Formel III liefern, sind in Standardwerken beschrieben, siehe z.B. Houben-Weyl, Ergänzungsband E20.

Die Herstellung von amorphen Copolymeren, die zur Herstellung der erfindungsgemässen Kontaktlinsen dienen, ist beispielsweise in der EP-A-073,087 und der EP-A- 111,343 beschrieben.

Im Hinblick darauf, dass die erfindungsgemäss verwendeten Copolymere thermoplastisch verarbeitbar sind, ergibt sich eine Fülle von Möglichkeiten, Kontaktlinsen aus ihnen herzustellen. Dabei kann jeweils von den z.B. als Granulat, Pulver oder Folien vorliegenden amorphen Copolymeren ausgegangen werden.

So können die erfindungsgemässen Linsen nach an sich bekannten Verfahren wie Giessen in statischen Formen, Rotationsgiessen, Verpressen, Tiefziehen, Warmformen, Drehen oder Laserbearbeitung hergestellt werden.

Diese Verfahrensschritte sind an sich bekannt und bedürfen daher für den Fachmann keiner detaillierten Erläuterung. Ueblicherweise geht man jedoch bei der Herstellung von Kontaktlinsen von flüssigen Monomeren oder Monomergemischen oder von Lösungen fester Monomerer aus, die erst im Verlaufe der Linsen- oder Rohlingherstellung polymerisieren. Die Besonderheit der erfindungsgemässen Herstellungsverfahren liegt darin, dass man von fertigen Copolymerisaten ausgeht, die thermoplastisch sind. Diese Materialien lassen es daher zu, neben den klassichen Kontaktlinsen-Herstellungsverfahren wie Drehen eines Rohlings, Rotationsguss oder Giessen in Einzelformen, die, z.T. in modifizierter Form, auch bei der vorliegenden Erfindung angewendet werden können, auch Wege zu beschreiten, die üblicherweise für die Herstellung von Kontaktlinsen nicht begangen werden.

Giessen in statischen Formen kann beispielsweise durch Spritzguss erfolgen. Dazu wird das amorphe Copolymer bei Temperaturen von 160-240°C, vorzugsweise 210-220°C, aufgeschmolzen und mittels einer Spritzgussmaschine in die Form eingespritzt. Falls Formen mit Innenkurve und Aussenkurve verwendet werden, lassen sich so unmittelbar Kontaktlinsen herstellen. Ferner können Kontaktlinsen durch Giessen hergestellt werden, indem eine Lösung des amorphen Copolymers in einem organischen Lösungsmittel in eine Form mit Innenkurve und Aussenkurve eingebracht wird, worauf man das Lösungsmittel verdampfen lässt. Geeignete Lösungsmittel in diesem und den folgenden Verfahren sind z.B. perfluorierte Ether oder perfluorierte Kohlenwasserstoffe.

Rotationsgiessen (spin casting) lässt sich erfindungsgemäss ebenfalls anwenden, indem eine Lösung des amorphen Copolymers in eine Form für Rotationsguss eingebracht wird, worauf die Form in Rotation versetzt wird. Dabei verdampft das Lösungsmittel. Die fertige Kontaktlinse, deren Abmessungen sich durch die Abmessungen der Form, die Rotationsgeschwindigkeit und die Viskosität der eingebrachten Lösung steuern lassen, bleibt in der Form zurück.

Verpressen geschieht erfindungsgemäss z.B. durch Schmelzen des amorphen Copolymers und Verpressen in einer Form oder durch Formpressen einer Folie aus dem amorphen Copolymer. Eine Folie aus dem amorphen Copolymer kann auf an sich bekannte Weise beispielsweise durch Extrudieren, durch Blasen oder durch Giessen einer Lösung des amorphen Copolymers hergestellt werden.

Aus einer z.B. wie vorstehend erwähnt hergestellten Folie kann eine Kontaktlinse auch auf an sich

bekannte Weise durch Tiefziehen oder Warmformen hergestellt werden.

Drehen bietet sich als letzter Verfahrensschritt zur Herstellung von erfindungsgemässen Kontaktlinsen ebenfalls an. Dies gilt immer dann, wenn ein z.B. nach einem der vorstehend genannten Verfahren erhältlicher Rohling noch weiterer Bearbeitung bedarf. Unter Drehen wird das an sich bekannte spanabhebende Bearbeitungsverfahren von Kontaktlinsen-Rohlingen verstanden. Entsprechende Rohlinge lassen sich z.B. durch Spritzguss, Extrusion von Rundstäben und deren Zerteilen, Giessen aus einer Lösung oder Giessen einer Schmelze herstellen. Unter den Begriff Kontaktlinsen-Rohling fallen in diesem Zusammenhang Knöpfe (buttons) oder semi-mold-Produkte, wie z.B. Innenkurvenrohlinge. Typische Rohlinge weisen Dicken von 4 oder 6 mm und Durchmesser von 10 bis 17, z.B. 12 oder 14 mm auf.

Auch die Laserbearbeitung lässt sich erfindungsgemäss anwenden, wobei man von Rohlingen oder nach einem der anderen Verfahren hergestellten Kontaktlinsen ausgeht, sofern letztere noch einer zusätzlichen Feinbearbeitung ihrer Oberfläche bedürfen.

Auch erfindungsgemässe Intraokularlinsen können auf an sich bekannte Weise hergestellt werden, z.B. durch Drehverfahren oder durch Pressen aus Pulver, Granulat oder Folie. Für erfindungsgemässe Intraokularlinsen können unterschiedliche Haptiken eingesetzt werden. Die Haptik kann dabei in die Moldform integriert sein oder durch Laserschneiden nachträglich geformt oder herausgeschnitten werden. Verschiedene Haptiken sind z.B. von P. Fechner in Intraokularlinsen, Grundlagen und Operationslehre, Ferdinand Enke Verlag, Stuttgart 1980, beschrieben.

Die erfindungsgemässen ophthalmischen Linsen weisen, wie bereits erwähnt, ausgezeichnete physikalische Parameter auf, wie hohe Härte und Sauerstoffdurchlässigkeit. Beispielsweise wurden Härten von 60-70 $N/mm^2$ und $D_k$-Werte von 280-350 Einheiten gemessen. Entsprechend hohe Härten werden sonst nur zu Lasten der Dk-Werte erhalten und umgekehrt. So weisen z.B. herkömmliche Materialien mit einer Härte von 60-70 $N/mm^2$ Dk-Werte von unter 100 auf und Materialien mit Dk-Werten von 150 haben eine Härte von 40 oder weniger. Die vorstehend erwähnte Kombination einer derart hohen Härte mit einer derartig hohen Sauerstoffdurchlässigkeit ist daher eine herausragende Eigenschaft der erfindungsgemässen Kontaktlinsen und Intraokularlinsen, die sie massgeblich und in unerwarteter Weise vom Stand der Technik unterscheidet. Andererseits ist der Benetzungswinkel vergleichsweise hoch, so dass es wünschenswert ist, insbesondere bei Kontaktlinsen, die Oberfläche der erfindungsgemässen ophthalmischen Linsen besser benetzbar zu machen.

Weitere Gegenstände dieser Erfindung sind daher ein Verfahren zur Hydrophilisierung der nach den vorstehend erwähnten Verfahren erhältlichen ophthalmischen Linsen und so behandelte Linsen. Diese Hydrophilisierung kann auf an sich bekannte Weise geschehen. Geeignete Verfahren sind beispielsweise Behandlung im Plasma mit Gasen, Pfropfpolymerisation mit hydrophilen Monomeren, Einfürhung von Hydroxygruppen durch Abwandlung der Einheiten der Formel I oder Oxidation von Copolymerbestandteilen.

Die Behandlung von beispielsweise Kontaktlinsen mit Gasen im Plasma ist bereits an sich bekannt. Als Gase können beispielsweise $O_2$, $O_3$, $N_2$, He, Ar, $NH_3$ oder Niederalkane mit beispielsweise bis zu 7 Kohlenstoffatomen, wie $CH_4$, allein, im Gemisch oder im Gemisch mit in Wasserdampf verwendet werden. Die Behandlung in Plasma mit Gasen ist im Zusammenhang mit dieser Erfindung jedoch nicht auf die Verwendung von Stoffen beschränkt, die unter Normalbedingungen (Temperatur, Druck) Gase sind. Stattdessen sind erfindungsgemäss von dem Ausdruck "Gase" in diesem Zusammenhang auch Verbindungen umfasst, deren Dampfdruck so hoch ist, dass sie ein Niederdruckplasma erzeugen können. Solche Verbindungen sind beispielsweise niedermolekulare Alkane, Alkene, Alkohole, Amine, Aldehyde, Carbonsäuren, Carbonsäurederivate, wie hydrophile Ester oder Amide, und Ether, die jeweils allein, im Gemisch untereinander oder z.B. im Gemisch mit Sauerstoff, Luft und/oder Wasserdampf verwendet werden können. Als niedermolekular gelten in diesem Zusammenhang insbesondere Verbindungen mit einem Molekulargewicht von bis zu 200, bevorzugt von bis zu 140, besonders bevorzugt bis zu 88.

Auch die Pfropfpolymerisation mit hydrophilen Monomeren ist bereits bekannt, z.B. gemäss EP-A-220,919. Sie kann im Plasma oder in Lösung durchgeführt werden. Als hydrophile Monomere eignen sich die üblicherweise für Kontaktlinsen verwendeten hydrophilen Vinylmonomere wie z.B. Methacrylsäure, Hydroxyethylmethacrylat, Vinylpyrrolidon, N-Vinyl-methylacetamid, Dimethylacrylamid oder Homologe davon. Bevorzugt wird diese Hydrophilisierungsmassnahme in geeigneten Lösungsmitteln, wie Kohlenwasserstoffen z.B. aromatischen Kohlenwasserstoffen, wie Toluol oder Dimethylbenzol, oder aliphatischen Kohlenwasserstoff, wie z.B. Hexan, und in Gegenwart von Radikalbildnern, wie z.B. Perverbindungen, z.B. Wasserstoffperoxid oder Persäuren, durchgeführt.

Die in den nicht speziell oberflächenbehandelten Kontaktlinsen oder Intraokularlinsen stets vorhandenen Einheiten der Formel I lassen sich z.B. durch saure Hydrolyse, oder in basischem Medium in Gegenwart eines Wasserstoffüberträgers in Gruppen der Formel V

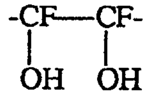

(V)

überführen, deren Anwesenheit ebenfalls die Hydrophilie der Oberfläche erhöht. Geeignete Reagentien hierfür sind beispielsweise Alkalimetalle, wie Natrium oder Kalium, vorzugsweise in Lösungsmitteln, die Wasserstoff übertragen können, wie Ethern, insbesondere cyclischen Ethern, z.B. Tetrahydrofuran, oder in Ammoniak, oder Säuren wie anorganische oder organische Säuren, z.B. Chlorwasserstoffsäure, Schwefelsäure oder Trifluoressigsäure. Auch können die erfindungsgemässen ophthalmischen Linsen in Lösung mit Oxidationsmitteln wie z.B. Wasserstoffperoxid oder Salpetersäure oxidativ behandelt werden.

Nachfolgend wird die Erfindung anhand von Beispielen erläutert, die jedoch die Erfindung in keiner Weise beschränken sollen. Temperaturen werden in Celsiusgraden angegeben.

A : Herstellung von Rohlingen, Halbfertig-Linsen, Kontaktlinsen und Intraokularlinsen

Beispiel 1 :

Teflon AF 1600 oder 2400 Granulat wird in geeigneter Weise bei 210-220°C in einer Spritzgussmaschine aufgeschmolzen und in die Form eingespritzt. Die Spritzgussform ist als Einfach- oder Mehrfachform ausgebildet. Der Nachdruck auf die Formmasse und die Abkühlung des Spritzlings in der Form werden so eingestellt, dass ein weitgehend spannungsfreier Rohling mit einem Durchmesser von ca. 14 mm und einer Dicke von 6 mm erhalten wird. Restspannungen können durch anschliessendes Tempern der Rohlinge unter Normalatmosphäre, $N_2$ oder Vakuum bei 110°-140°C beseitigt werden.

Alternativ wird das in einem Extruder aufgeschmolzene Polymer zu Rundstäben mit einem Durchmesser von ca. 14 mm verarbeitet. Die Rundstäbe werden als Ganzes oder in Rohlinge mit einer Dicke von 6 mm geschnitten getempert.

Beispiel 2a :

Granulat wird wie in Beispiel 1 beschrieben in eine Spritzgussform eingespritzt. Die Form ist mit Inserts versehen, die konvex ausgebildet sind. Die Radien der Inserts entsprechen den Basiskurven der gewünschten Kontaktlinsen (sogenannte Basiskurvenrohlinge). Die Radien sind sphärisch. Die Basiskurvenrohlinge können aber auch asphärisch, insbesondere elliptisch, ausgebildet sein. Alternativ sind die Inserts mit einem eingearbeiteten Linsendurchmesser und Linsenrand versehen. Aus diesen Rohlingen wird durch Andrehen der Frontkurve die endgültige Kontaktlinse erhalten.

2b :

Gemäss dieser Ausführungsform sind die Inserts konkav ausgebildet, so dass, nach- dem die entsprechende Basiskurve angedreht ist, eine Plan-, Sammel- oder Zerstreuungslinse erhalten wird. Auch hierbei sind alternativ der endgültige Linsendurchmesser und der Linsenrand eingearbeitet.

Beispiel 3 :

Wie in Beispiel 1 wird Granulat in geeigneter Weise plastifiziert und in eine Kontaktlinsen-Form eingespritzt. Die Form ist so ausgebildet, dass sie die gewünschte Basiskurve, Dioptrie, den Durchmesser, den Bevel und Rand der Linse wiedergibt. Die Basiskurve ist wahlweise sphärisch, asphärisch oder als besondere Ausführungsform elliptisch.

Beispiel 4 :

Granulat oder Pulver von Teflon AF 1600, 2400 oder ein Gemisch davon in abgewogener Menge wird in einer geeigneten Pressform auf 200°-220°C erwärmt und unter Druck zusammengepresst. Unter Aufrechterhaltung des Druckes lässt man die Masse bzw. Kontaktlinse in der Form abkühlen. Die verwendete Form ist als Buttonform, Semimold (Beispiel 2) oder Linsenform (Beispiel 3) ausgebildet. Die Einwaage Granulat oder Pulver richtet sich wie folgt nach der verwendeten Form :

- für Button : 0,5-1,5 g

- für Semimold : 0,1-0,9 g
- für Linsen : 15-100 mg.

Beispiel 5 :

In einer geeigneten Plastifiziereinheit wird Granulat oder Pulver von Teflon AF 1600 oder 2400 plastifiziert und durch eine Schlitzdüse gepresst. Die erhaltene Folie mit einer Dicke von 0,2-0,5 mm wird unmittelbar oder später durch Umformprozess, Warmformen, Tiefziehen oder Formpressen in einer Kontaktlinsen-Form zu einer Kontaktlinse oder Intraokularlinse umgeformt oder gepresst. Alternativ werden entsprechende Folien im Blasverfahren hergestellt.

Beispiel 6 :

Etwa 8-10 Gew.-% Granulat oder Pulver von Teflon AF 1600 oder 2400 werden in einem perfluorierten Lösungsmittel wie z.B. Galden® (Fa. Montedison) oder Fluorinert® (Fa. 3M) wenn nötig unter Erwärmen gelöst. Aus der Lösung wird durch Abziehen des Lösungsmittels durch Erwärmung, Gebläse oder Vakuum eine Folie hergestellt. Diese Folie wird gemäss einem der Umformungsverfahren (siehe Beispiel 5) zu einer Kontaktlinse geformt.

Beispiel 7 :

Eine gemäss Beispiel 6 erhaltene Lösung des Copolymers wird in eine vorgefertigte Form gegeben. Das Lösungsmittel wird unter Erwärmung oder Vakuum verdampft. Die Form ist so ausgebildet, dass sie die Frontfläche der Linse mit Dioptrie, Durchmesser und Randgestaltung der Linse wiedergibt. Zur Ausgestaltung der Basiskurve wird diese mit einem entsprechenden Stempel mit eingearbeitetem Radius nachgeformt.

Beispiel 8 :

Eine gemäss Beispiel 6 erhaltene Lösung wird in eine vorgefertigte Form gegeben, die sich um die eigene Achse dreht. Die Form ist so ausgebildet, dass sie die Frontfläche der Kontaktlinse mit Dioptrie, Durchmesser und Rand wiedergibt. Durch Erwärmung wird das Lösungsmittel verdunstet, wobei man die Form gleichzeitig rotieren lässt. Durch Einstellung der Rotations-Geschwindigkeit werden unterschiedliche Radien der Basiskurven erhalten (sogenanntes Spincast-Verfahren).

B : Beispiele zur Hydrophilisierung von Kontaktlinsen oder Intraokularlinsen

Beispiel 9 :

Fertige Kontaktlinsen gemäss einem der vorstehenden Beispiele werden zur Verbesserung der Benetzbarkeit unter Normalatmosphäre einer Coronaentladung ausgesetzt. Die Kontaktlinsen werden danach mit physiologischer Kochsalzlösung äquilibriert. Die Oberfläche ist danach homogen benetzbar.

Beispiel 10 :

Erfindungsgemässe Kontaktlinsen mit unbehandelter Oberfläche werden einer Plasmaentladung ausgesetzt. Diese wird in einer Atmosphäre von $O_2$ oder $O_3$ erzeugt. Ferner kann diesen Gasen Wasserdampf beigemischt werden. Nach einer Behandlungsdauer von 10 Sekunden bis 15 Minuten weisen die Linsen einen Benetzungswinkel $< 40°$ auf (ohne Behandlung $> 100°$). Gleiche Ergebnisse werden ausgehend von $N_2$, He, Ar, $NH_3$ oder $CH_4$, allein oder im Gemisch miteinander, erzielt.

Beispiel 11 :

Erfindungsgemässe Kontaktlinsen mit unbehandelter Oberfläche werden mittels Ar-Plasma aktiviert. Unter Verwendung hydrophiler Monomerer wie Methacrylsäure, HEMA, Methacrylamid, Vinylpyrrolidon oder N-Vinylmethylacetamid wird durch Pfropfpolymerisate eine hydrophile Oberfläche erzeugt. Gleiche Egebnisse werden ausgehend von $N_2$- oder $O_2$-Plasma erzielt.

Beispiel 12 :

Die Oberflächen von erfindungsgemässen Kontaktlinsen oder Intraokularlinsen mit unbehandelter Oberfläche werden in einer Lösung von Hexan mit $H_2O_2$ als starkem Radikalbildner aktiviert und unter Hinzufügen von hydrophilen Monomeren, wie in Beispiel 11, einer Pfropfpolymerisation unterzogen. Die Benetzung der Oberfläche ist nach Aequilibrierung mit physiologischer Kochsalzlösung deutlich verbessert.

Beispiel 13 :

Erfindungsgemässe Kontaktlinsen mit unbehandelter Oberfläche werden in einem Tauchprozess einer Lösung von $Na/NH_3$ oder Na/Tetrahydrofuran (Tetra Etch® Fa. Gore) ausgesetzt. Nach der Behandlung wird mit Aceton und anschliessend Wasser überschüssiges Reagenz abgespült und mit physiologischer Kochsalzlösung äquilibriert. Die Behandlung wird während 1-60 Sekunden und bei Raumtemperatur oder bei Temperaturen bis ca. 100°C durchgeführt.

**Patentansprüche**

1. Ophthalmische Linsen bestehend im wesentlichen aus einem amorphen Copolymer, welches Einheiten der Formel I

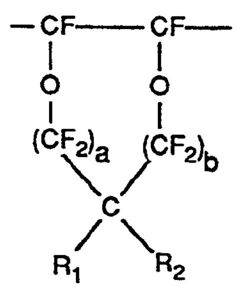

(I)

und Einheiten der Formel II

$$-CF_2-CF_2- \quad \text{(II)}$$

enthält, worin a und b unabhängig voneinander für null, eins oder zwei stehen, und worin $R_1$ und $R_2$ unabhängig voneinander perfluoriertes Niederalkyl bedeuten.

2. Ophthalmische Linsen gemäss Anspruch 1, dadurch gekennzeichnet, dass a und b null bedeuten.

3. Ophthalmische Linsen gemäss Anspruch 1, dadurch gekennzeichnet, dass a und b null bedeuten und $R_1$ und $R_2$ für perfluoriertes $C_1$-$C_4$-Alkyl stehen.

4. Ophthalmische Linsen gemäss Anspruch 3, dadurch gekennzeichnet, dass $R_1$ und $R_2$ für Trifluormethyl stehen.

5. Ophthalmische Linsen gemäss Anspruch 1, dadurch gekennzeichnet, dass das Molverhältnis von Einheiten der Formel I zu Einheiten der Formel II im Bereich von 30 :70 bis 90 :10 liegt.

6. Ophthalmische Linsen gemäss Anspruch 1, dadurch gekennzeichnet, dass sie in Anteilen von bis zu 40 Mol% vom Copolymer Einheiten der Formel III,

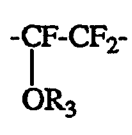

(III)

worin $R_3$ einen perfluorierten Alkylrest der Formel $C_nF_{2n+1}$ bedeutet, worin n für 1 bis 4 steht, oder worin $R_3$ einen perfluorierten Cycloalkylrest der Formel $C_mF_{2m-1}$ bedeutet, worin m für 5 bis 8 steht, und/oder solche der Formel IV,

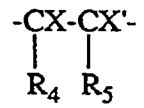

(IV)

worin X und X'unabhängig voneinander für Wasserstoff oder Fluor stehen und $R_4$ und $R_5$ unabhängig voneinander für Wasserstoff, Fluor, Niederalkyl oder perfluoriertes Niederalkyl stehen, ausgenommen solche Einheiten der Formel IV, worin X, X', $R_4$ und $R_5$ für fluor stehen.

7. Ophthalmische Linsen gemäss Anspruch 6, dadurch gekennzeichnet, dass die Copolymere zu mindestens 90 Mol% aus Einheiten der Formeln I und II bestehen.

8. Ophthalmische Linsen gemäss Anspruch 6, dadurch gekennzeichnet, dass die Copolymere zusätzlich zu Einheiten der Formel I und II Einheiten der Formel III enthalten.

9. Ophthalmische Linsen gemäss Anspruch 6, dadurch gekennzeichnet, dass die Copolymere zusätzlich zu Einheiten der Formel I und II Einheiten der Formeln III und IV enthalten.

10. Ophthalmische Linsen gemäss Anspruch 8, worin a und b null bedeuten.

11. Ophthalmische Linsen gemäss Anspruch 9, worin a und b null bedeuten.

12. Ophthalmische Linsen gemäss Anspruch 1, dadurch gekennzeichnet, dass sie aus Teflon AF 1600 bestehen.

13. Ophthalmische Linsen gemäss Anspruch 1, dadurch gekennzeichnet, dass sie aus Teflon AF 2400 bestehen.

14. Ophthalmische Linsen gemäss Anspruch 1, dadurch gekennzeichnet, dass sie aus einem Gemisch von Teflon AF 1600 und Teflon AF 2400 bestehen.

15. Ophthalmische Linsen gemäss einem der Ansprüche 1 bis 14, dadurch gekennzeichnet, dass es sich um Kontaktlinsen handelt.

16. Ophthalmische Linsen gemäss einem der Ansprüche 1 bis 14, dadurch gekennzeichnet, dass es sich um Intraokularlinsen handelt.

17. Verfahren zur Herstellung von ophthalmischen Linsen gemäss Anspruch 1, dadurch gekennzeichnet, dass sie, ausgehend von einem amorphen Copolymer, wie es in Anspruch 1 definert ist, durch Giessen in statischen Formen, Rotationsgiessen, Verpressen, Tiefziehen, Warmformen, Drehen oder Laserbearbeitung hergestellt werden.

18. Verwendung eines amorphen Copolymers, wie es in Anspruch 1 definiert ist, zur Herstellung von Kontaktlinsen.

19. Verwendung eines amorphen Copolymers, wie es in Anspruch 1 definiert ist, zur Herstellung von Intraokularlinsen.

20. Verfahren zur Hydrophilisierung der Oberfläche einer ophthalmischen Linse gemäss Anspruch 1, dadurch gekennzeichnet, dass die Oberfläche auf an sich bekannte Weise durch Behandlung im Plasma mit Gasen, Pfropfpolymerisation mit hydrophilen Monomeren, Einführung von Hydroxygruppen durch Abwandlung der Einheiten der Formel I oder Oxidation von Copolymerbestandteilen hydrophilisiert wird.

21. Verfahren gemäss Anspruch 20, dadurch gekennzeichnet, dass die Oberfläche durch Behandlung im Plasma mit Gasen hydrophilisiert wird.

22. Verfahren gemäss Anspruch 20, dadurch gekennzeichnet, dass die Oberfläche mit einem Alkalimetall in einem Wasserstoff übertragenden Lösungsmittel durch Einführung von Hydroxygruppen hydrophilisiert

wird.

**23.** Verfahren gemäss Anspruch 20, dadurch gekennzeichnet, dass die Oberfläche mittels saurer Hydrolyse durch Einführung von Hydroxygruppen hydrophilisiert wird.

**24.** Kontaktlinsen, die gemäss einem der Verfahren der Ansprüche 20-23 erhältlich sind.

Europäisches Patentamt

# EUROPÄISCHER RECHERCHENBERICHT

Nummer der Anmeldung

EP 91 81 0103

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-349126 (MITSUBISHI RAYON CO. LTD)<br>*Example 1*<br>----- | 1-14 | G02B1/04<br>C08L45/00 |
| | | | **RECHERCHIERTE SACHGEBIETE (Int. Cl.5 )** |
| | | | C08G<br>C08L<br>C08F<br>G02B |

Der vorliegende Recherchenbericht wurde für alle Patentansprüche erstellt

| Recherchenort | Abschlußdatum der Recherche | Prüfer |
|---|---|---|
| DEN HAAG | 24 MAI 1991 | WILSON A.J.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)